Europäisches Patentamt

European Patent Office

Office européen des brevets

(19)

(11) Publication number: **0 082 826**
**B1**

(12) **EUROPEAN PATENT SPECIFICATION**

(45) Date of publication of patent specification: **09.09.87**

(51) Int. Cl.⁴: **H 01 M 2/04, H 01 M 2/02**

(21) Application number: **82830299.2**

(22) Date of filing: **13.12.82**

(54) Cell-container for electric-accumulators particularly for those meant for traction.

(30) Priority: **21.12.81 IT 8565381**
**08.04.82 IT 8554882**

(43) Date of publication of application:
**29.06.83 Bulletin 83/26**

(45) Publication of the grant of the patent:
**09.09.87 Bulletin 87/37**

(84) Designated Contracting States:
**AT BE CH DE FR GB LI NL SE**

(56) References cited:
**AU-B- 46 314**
**DE-A-2 604 468**
**FR-A-1 436 030**
**FR-A-2 110 750**
**FR-A-2 476 918**
**GB-A-1 131 556**
**US-A-2 971 045**
**US-A-3 301 457**
**US-A-3 424 623**
**US-A-3 993 507**
**US-A-4 107 402**

**PATENTS ABSTRACTS OF JAPAN, vol. 5, no.
99 (E-63)771r, 26th June 1981**

**The file contains technical information
submitted after the application was filed and
not included in this specification**

(73) Proprietor: **Stocchiero, Olimpio**
**4 Via Kennedy**
**I-36050 Montorso Vicentino (IT)**

(72) Inventor: **Stocchiero, Olimpio**
**4 Via Kennedy**
**I-36050 Montorso Vicentino (IT)**

(74) Representative: **Bonini, Ercole**
**Corso Fogazzaro, 8**
**I-36100 Vicenza (IT)**

(56) References cited:
**PATENTS ABSTRACTS OF JAPAN, vol. 4, no.
189 (E-39)671r, 25th December 1980**

**PATENTS ABSTRACTS OF JAPAN, vol. 4, no.
104 (E-19)586r, 25th July 1980**

Courier Press, Leamington Spa, England.

**Description**

The invention relates to a casing made of plastic material for industrial accumulator batteries, used especially for electric traction.

Accumulator batteries for industrial use have standard overall dimensions according to internationally adopted tables. For this very reason, the manufacturer who wishes to increase the energy potential of the battery by increasing the volume of the electrolyte contained in the battery itself, must do so while maintaining the overall external dimensions determined by the international standardisation.

One of the methods for increasing the electrolyte volume within the established overall dimensions consists in decreasing the thickness of the battery casing.

However, said thickness can not be decreased below certain limits, since the hydrostatic thrust of the electrolyte would cause the deformation of the casing.

Besides it must be avoided that the junction between the casing and the battery lid cause protruding profiles, otherwise any decrease in the thickness of the casing would turn out to be useless.

According to US Patent 3.993.507 of November 23rd, 1976, in order to avoid the deformation of the casing for batteries with elongated elements, a plurality of transversal ribs or hoops has been foreseen, which support the pressure of the electrolyte and which develop around the periphery of the casing.

As far as the junction between the lid and the battery casing is concerned, in order to avoid an increase of the overall dimensions of the casing, the known technique foresees a top welding between a lid having a flat edge and the corresponding edge of the casing.

Such fusion welding builds up an external weld bead, which afterwards must be trimmed, in order to remain within the standard overall dimensions.

However, this type of process causes two kinds of drawbacks: the first one has to do with the fact that the trimming operation represents an additional cost in the manufacturing of the batteries; the second drawback arises from the fact that said trimming might uncover some lacks of material, due to possible intervening air bubbles and as a consequence, the perfect seal of the lid may be jeopardized with a possible leaking of the electrolyte or, besides, with the impossibility of performing the automatic refill by depression or compression.

The purpose of the present invention is that of realizing a battery casing made of plastics material, which, having the same overall dimensions, contains an increased volume of electrolyte.

Another purpose is that of obtaining a battery casing which is not deformed by the hydrostatic pressure of the electrolyte.

One more purpose is that of obtaining a casing which, because of its special shape, can be cut at different heights, after it has been moulded, so that batteries having different energy capacities can be manufactured from a single manufactured item.

Another purpose is that of obtaining a junction between lid and casing which guarantees a safe seal and is contained within the overall dimensions of the casing.

Accordingly, this invention realizes a casing made of polyethylene or polypropylene plastics material with walls having a reduced thickness, in which the stiffness of the vertical walls which would have been lost, because of the decreased thicknesses, is preserved thanks to the presence of perimetral horizontal impressions in bas-relief. The arrangement of the impressions is such that it allows, when necessary, the cutting of the moulded item, such cutting occurring in said indented areas.

According to the invention, the top part of the casing has a flat edge having an increased thickness toward the inside, where the area for the welding to the lid is.

One of the advantages obtained with the casing being the object of the invention is that, even with reduced thicknesses, the casing is stiff and does not become misshapen. Besides, the horizontal bas-relief impressions make it possible to guide and to block the battery elements.

Another advantage consists in the fact that with a single mould, it is possible to obtain, by cutting, different manufactured items having lower heights.

Yet one more advantage derives from the fact that the flat edge of the item top makes possible a lid welding which is anchored to a double perimetral area, such feature being particularly important where the tensions due to the stretching of the poles are very considerable.

These and other advantages are better shown in the description of a preferred form of embodiment which is given by way of example only but does not mean to be limiting and which is illustrated in the enclosed drawing of figures, wherein:

Fig. 1 represents an overall view of a battery with a casing obtained by blow-hole, having in its lateral walls some horizontal perimetral impressions and a lid welded according to the disclosure;

Fig. 2 emphasizes the detail of the junction between the lid and the casing having a larger junction surface;

Fig. 3 represents the shape of the casing top;

Fig. 4 emphasizes the junction between the lid and the casing having a reduced height;

Fig. 5 is a partial cross-section of the casing represented in Fig. 1;

Fig. 6 represente the cross section misshapen at the top of the casing, as would be the case, were the indented perimetral impression not present;

Fig. 7 represents the cross section misshapen in the central area of the casing, as would be the case in casings of considerable height without indented perimetral impressions.

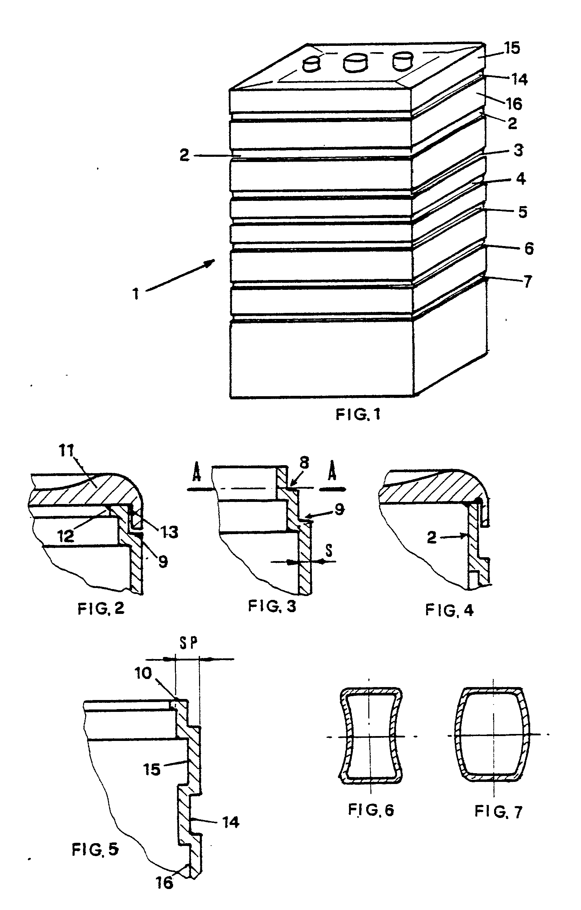

With reference to Fig. 1, the plastics material, which is usually polypropylene, is hole-blown into a shape, so that it acquires the aspect of a parellelepiped, as represented in Fig. 1 and marked with 1, in which the vertical walls have some impressions arranged in bas-relief perimetral horizontal bands, as shown in 2, 3, 4, 5, 6 and 7. Said impressions have the same thickness "S" as the vertical walls and they are indented toward the inside by not more than one or two millimeters.

The presence of said impressions gives the vertical walls such a stiffness, as to avoid any deformation of the casing under the hydrostatic thrust of the electrolyte.

In Fig. 7 a drawing not according to scale, represents the shape that a section of the battery or very long batteries would take approximately in the middle of their height, if the reinforcements built by the perimetral bas-relief impressions were not present, as shown in Fig. 1.

As it has already been mentioned, said reinforcements have been made at heights which correspond to as many standardized sizes, so as to be able to cut modularly the container casings at the desired height in order to obtain batteries having different capacities, should this be required.

The perimetral impressions also have the task of guiding the insertion of the elements inside the battery and to block them in their seats. The top part of the casing presents a moulding having a double step, as shown in Fig. 3 and marked with 8 and 9. After the manufactured item has been produced, one proceeds to remove the terminal part in correspondence to the last step 8, following the cutting plane A—A, so that the top edge of the container casing has a width equal to the sum of the thickness "S" and of the depth of step 8. The surface of the edge thus obtained is marked with 10 in Fig. 5.

Said surface 10 represents the area which will be welded to lid 11 in Fig. 2. It is obvious that the weld bead will build up in area 12 and in area 13 along the entire edge between the casing and the lid, without involving the outside area of the container.

The thickness of the lid finds its seat in the indented space obtained in step 9 and, therefore, there will be no protuberances outside the standard shape of the battery. The solution of welding on a wider surface, as has now been described, represents, in any case a welding with a higher degree of safety, and it is particularly suited for batteries being higher than 500 mm.

In the case of shorter batteries, a more than sufficient degree of safety for the welding between the lid and the container casing is given also by the solution emphasized in Fig. 4. It represents the welding performed between the lid and the casing, when the casing of Fig. 1 is cut, for instance at point 2, in order to obtain a battery having a lower height, using the same manufactured item. The cut is made at the height of one of the impressions, which corresponds to one of the standard heights. In this case, since the double step is not present, it is possible to use only the welding surface provided by thickness of the casing alone, but such surface is sufficient to insure by itself a perfect seal, also because the weld bead which builds up and is not removed, contributes to increase the contact surface between the lid and the container casing.

In Fig. 5, which represents a partial cross-section of the top part of the container casing, identification 14, which has been made in order to create a reinforcing rib near the terminal part of the casing, is visible. This reinforcement avoids the possible deformation which might occur at the top of the casing, because of the tensions which develop during the blow-hole process and which would tend to free themselves after the cut A—A has been performed.

Fig. 6 shows in cross-section with a drawing not according to scale, the just mentioned effect which might occur without the reinforcement provided by rib 14. Besides, if we mark with SP in Fig. 5 the minimum thickness dimension possible for the different casings (which is usually comprised between 3 and 3.75 mm), one can immediately notice how the blow-hole process, while preserving the total overall dimensions contained in the "SP" thickness, also allows a considerable increase of the inside volume available to increase the quantity of electrolyte in the battery while the outside overall dimensions remain unaltered. Areas 15 and 16 in Fig. 5 show only in part the available space which is increased in relation to the moulding process. Said space repeats itself along the entire height of the casing, all the way down to the bottom, with the exception of the areas where the indented impressions are present. It is known that the possibility of increasing the amount of electrolyte while keeping the same overall dimensions give the battery an increased energy capacity with obvious advantages.

**Claims**

1. A blow moulded casing for accumulator batteries made of polyethylene or polypropylene plastics material, of thickness less than the minimum obtainable by conventional moulding the vertical walls of said casing having impressions (2: 7) in perimetral horizontal bas-relief bands, arranged at such heights so as to allow the modular cut of the manufactured item according to standard battery sizes and being such as to guarantee the stiffness of the vertical walls.

2. A battery casing according to claim 1, characterized by the fact that the top part of said casing presents a shape with two steps (8, 9), the lower one being capable of being cut at its basis, to provide a flat surface wider that the thickness of the casing suited to be welded on the inside surface of a lid, following a double perimetral outline (12, 13).

3. A battery casing according to claims 1 and 2, characterized by the fact that near the top part a reinforcing perimetral rib (14) is present which prevents the deformation of the outlines of the edges.

**Patentansprüche**

1. Blasgepresster Behälter für Akkumulatorenbatterien aus Polyethylene- oder Polypropylene-Kunstoffmaterial mit einer dünneren Dicke als die, die mit dem konventionellen Pressen-Verfahren erhaltbar ist, die senkrechten Wände dieses Behälters weisen Eindrücke (2: 7) in perimetralangeordneten, waagerechten Basrelief-Bändern auf, die auf solchen Höhen angeordnet sind, die den modularen Schnitt des hergestellten Erzeugnisses nach den Standardabmessungen der Batterien erlauben und deren Bauform die Steifheit der senkrechten Wände gewährleistet.

2. Batterie-Behälter nach Anspruch 1, dadurch gekennzeichnet, daß der Oberteil dieses Behälters eine Form mit zwei Stufen (8, 9) aufweist, daß die untere Stufe auf ihrer Basis geschnitten werden kann, um eine flache Oberfläche zur Verfügung zu stellen, die breiter ist als die Dicke des Behälters und die geeignet ist, auf der inneren Oberfläche eines Deckels entlang einer doppelten, perimetrischen Umrißlinie (12, 13) geschweisst zu werden.

3. Batterie-Behälter nach den Ansprüchen 1, und 2, dadurch gekennzeichnet, daß in der Nähe des Oberteils eine perimetralangeordnete Versteifungsrippe (14) anwesend ist, die den Verzug der Kantenumrißlinien verhindert.

**Revendications**

1. Cuve estampée par soufflage pour batteries d'accumulateurs faite en matériel plastique polyéthylène ou polypropylène ayant une épaisseur inférieure au minimum réalisable par l'étampage conventionnel, les parois verticales de dite cuve présentant des impressions (2: 7) en bandes périmètrales horizontales en bas-relief, arrangées à des hauteurs, telles qu'elle permettent la coupe modulaire de l'article fabriqué selon les dimensions standard des batteries et étant formées de façonà garantir la rigidité des parois verticales.

2. Cuve pour batterie selon la revendication 1, caractérisée en ce que la partie supérieure de dite cuve présente une forme à deux gradins (8, 9), dont celui le plus bas peut être coupé à la base, pour fournir une surface platte étant plus large que l'épaisseur de la cuve et étant appropriée pour être soudée à la surface interne d'un couvercle, suivant une ligne périmètrale double (12, 13).

3. Cuve pour batterie selon les revendications 1 et 2, caractérisée en ce que il y a, près de la partie supérieure, une côte périmètrale (14) en renfort qui empêche la deformation des contours des bords.

FIG. 1

FIG. 2

FIG. 3

FIG. 4

FIG. 5

FIG. 6

FIG. 7